# EUROPEAN PATENT APPLICATION

(11) **EP 4 249 167 A1**
(43) Date of publication of application: **27.09.2023**
(21) Application number: 21910759.6
(22) Date of filing: 21.12.2021
(51) Int. Cl.: B23Q 1/54, B23B 19/00, B23Q 1/70, B23Q 5/20, B25J 11/00

(54) **MACHINE TOOL**

(30) Priority: 24.12.2020 JP 2020215523
(71) Applicant: BROTHER KOGYO KABUSHIKI KAISHA, Nagoya-shi, Aichi 467-8561 (JP)
(72) Inventor: TANAKA, Hiroyuki, Nagoya-shi, Aichi 467-8562 (JP)
(74) Representative: Prüfer & Partner mbB Patentanwälte · Rechtsanwälte
(86) International application number: PCT/JP2021/047229
(87) International publication number: WO 2022/138616

(57) **Abstract**

Provided is a machine tool that can suppress an increase in centrifugal force which is generated when turning an end effector, and prevent an increase in route errors of the end effector. This machine tool comprises: a rotary unit that rotates around a first axis; a first arm extending from the rotary unit; a second arm that is connected to the first arm, and supports an end effector; a single power source that is configured to supply power to the rotary unit and the second arm; and a switching mechanism that is configured to switch a destination of power supply from the power source, from one of the rotary unit and the second arm to the other. The second arm is configured to rotate around a second axis intersecting the first axis.

## Description

### TECHNICAL FIELD

The present technology relates to a machine tool that works on a workpiece.

### BACKGROUND ART

In recent years, there is a robot that uses a parallel link mechanism to work on and assemble an article. The robot includes a holding portion at an end portion of the parallel link mechanism, and the holding portion holds an end effector. The holding portion includes a motor that rotates about an up-down axis and a motor that rotates about a left-right axis. The two motors can rotate independently of each other to position the end effector.

### CITATION LIST

### PATENT LITERATURE

Patent Literature 1: JP2016-203282A

### SUMMARY OF INVENTION

### TECHNICAL PROBLEM

In a state were rotating one motor to turn the end effector, the entire holding portion including the other motor rotates. A weight of the other motor is large, so centrifugal force acting on the end effector increases during turning, and thus a path error of the end effector may increase. To prevent a power line and a signal line connected to the other motor from winding around a machine body, it is necessary to limit a turning range of one motor. Even in a state were the work can be executed by one rotation of the end effector, in a state were the turning range is limited, it is necessary to perform a complicated operation different from the one-rotation operation.

An object of the present disclosure is to provide a machine tool that reduces an increase in centrifugal force that occurs when an end effector turns, and that can reduce a path error even when the end effector turns at a high speed.

### SOLUTION TO PROBLEM

A machine tool of the present disclosure includes a rotating portion that is configured to rotate around a first axis, a first arm that extends from the rotating portion, a second arm that is connected to the first arm and supports an end effector, a single power source that is configured to supply power to the rotating portion and the second arm, and a switching mechanism that is configured to switch a power supply destination from the power source from one of the rotating portion or the second arm to the other, wherein the second arm is configured to rotate around a second axis that intersects the first axis.

The first arm of the machine tool is attached to the rotating portion and rotates around the first axis together with the rotating portion. The second arm rotates around the second axis. Power is supplied to the rotating portion or the second arm from the single power source through the switching mechanism. Therefore, even when a turning speed of the end effector is increased, since there is only one motor, centrifugal force does not increase. As a result, a path error can be reduced and wiring is facilitated.

The machine tool of the present disclosure includes a supporting portion that supports the rotating portion, where the switching mechanism includes a transmission mechanism that is provided on the rotating portion and the first arm for transmitting power to the second arm, a driving gear that is configured to be driven by the power of the power source and connected to the transmission mechanism, and a clutch that is provided on the rotating portion and configured to fix the rotating portion to the supporting portion or to connect the rotating portion to the driving gear.

In a state were the clutch fixes the rotating portion to the supporting portion, the power from the power source is transmitted to the second arm by the transmission mechanism and the driving gear. In a state were the clutch is connected to the driving gear, the power is transmitted to the rotating portion. In the present invention, since the switching mechanism is composed of standard components such as gears and clutches, the invention can be realized in a small size and at a low cost.

The machine tool includes a first engaging portion that is provided on the supporting portion and engaged with the clutch, and a second engaging portion that is provided in the driving gear and engaged with the clutch, where the clutch engages at least one of the first engaging portion and the second engaging portion when switching the power supply destination.

Since the clutch is engaged with at least one of the first engaging portion and the second engaging portion when switching the power supply destination, it is possible to prevent the clutch from being out of step with the first engaging portion and the second engaging portion.

In the machine tool according to one embodiment of the present disclosure, the clutch has a cylindrical shape, a plurality of first teeth are formed on one end portion of the clutch, a plurality of second teeth are formed on the other end portion of the clutch, the first engaging portion is arranged at a position facing between one of the plurality of first teeth and another one of the plurality of fist teeth adjoining the one of the plurality of first teeth, the second engaging portion is arranged at a position facing between one of the plurality of second teeth and another one of the plurality of second teeth adjoining the one of the plurality of second teeth, and a moving mechanism that is configured to move the clutch toward the first engaging portion or the second engaging portion is provided.

In one embodiment of the present disclosure, when the clutch moves toward the first engaging portion, the first engaging portion engages between the first teeth, and when the clutch moves towards the second engaging portion, the second engaging portion engages between the second teeth.

In the machine tool according to one embodiment of the present disclosure, the transmission mechanism includes a second rotating portion that is connected to the second arm and configured to rotate around the second axis, at least one intermediate shaft that is provided between the second rotating portion and the driving gear, a first gear mechanism that is provided between the intermediate shaft and the driving gear or between the intermediate shafts, and a second gear mechanism that is provided between the second rotating portion and the intermediate shaft and has a higher reduction ratio than the first gear mechanism.

In one embodiment of the present disclosure, the second gear mechanism having the higher reduction ratio than the first gear mechanism is provided between the second rotating portion and the intermediate shaft, so a positional error caused by backlash of the first gear mechanism can be adjusted by the second gear mechanism.

The machine tool according to one embodiment of the present disclosure includes a cover that covers the rotating portion, the first arm, and the second arm, where the power source is provided outside the cover.

In one embodiment of the present disclosure, since the power source, which is a heat source, is provided outside the cover, it is possible to prevent dust explosion or the like inside the cover and improve safety. Maintenance of the power source is facilitated.

In the machine tool according to one embodiment of the present disclosure, an angle between the first axis and the second axis is greater than 45 degrees and equal to or less than 90 degrees.

In one embodiment of the present disclosure, since the angle between the first axis and the second axis is greater than 45 degrees and equal to or less than 90 degrees, a rotation range of the end effector about the second axis increases.

The machine tool according to one embodiment of the present disclosure includes a rotational axis parallel to the second axis, where a starting torque around the rotational axis parallel to the second axis is greater than product of a component of a cutting load acting on the end effector about the second axis and a distance between the second axis and the end effector.

In one embodiment of the present disclosure, by establishing the above-described relationship, it is possible to prevent occurrence of a machining defect such as chatter due to an influence of backlash.

In the machine tool according to one embodiment of the present disclosure, the switching mechanism includes a transmission gear unit or a planetary gear unit with four bevel gears.

In one embodiment of the present disclosure, the transmission gear unit or the planetary gear unit with the four bevel gears is used to realize switching of power supply destinations.

### ADVANTAGEOUS EFFECTS OF INVENTION

In the machine tool according to one embodiment of the present disclosure, the first arm is provided on the rotating portion and rotates around the first axis together with the rotating portion. The second arm rotates around the second axis. Power is supplied to the rotating portion or the second arm from the single power source through the switching mechanism. Since the power source does not rotate, an increase in centrifugal force generated when the end effector is turned can be reduced, and the path error of the end effector during high-speed turning can be reduced.

### BRIEF DESCRIPTION OF DRAWINGS

FIG. 1 is an external perspective view of a machine tool according to a first embodiment.
FIG. 2 is a schematic perspective view of the machine tool in a cover.
FIG. 3 is a first longitudinal cross-sectional view of a main shaft unit.
FIG. 4 is a second longitudinal cross-sectional view of the main shaft unit.

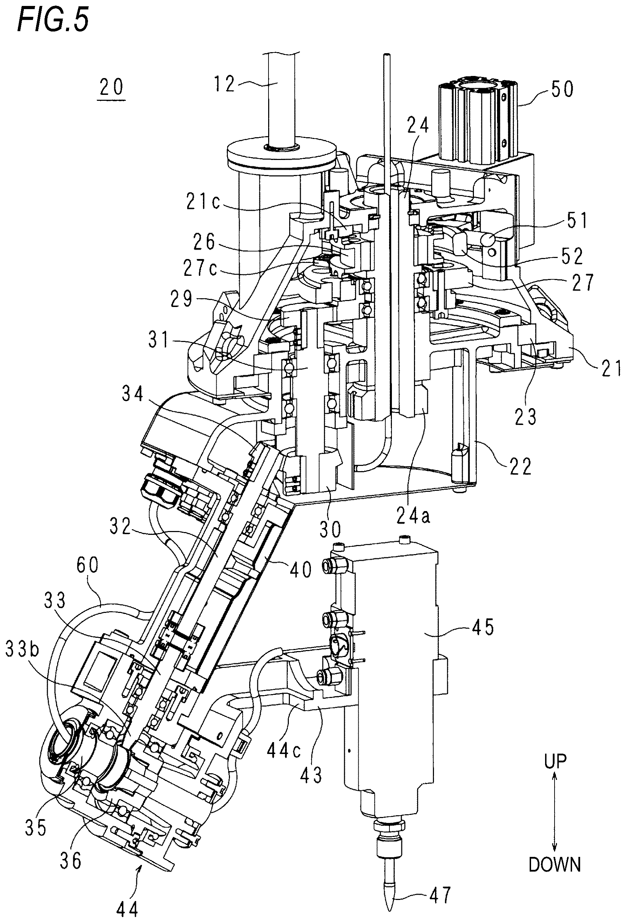

FIG. 5 a cross-sectional perspective view of the main shaft unit.
FIG. 6 is a partially enlarged longitudinal cross-sectional view of a dog clutch, a first engaging portion, and a second engaging portion;

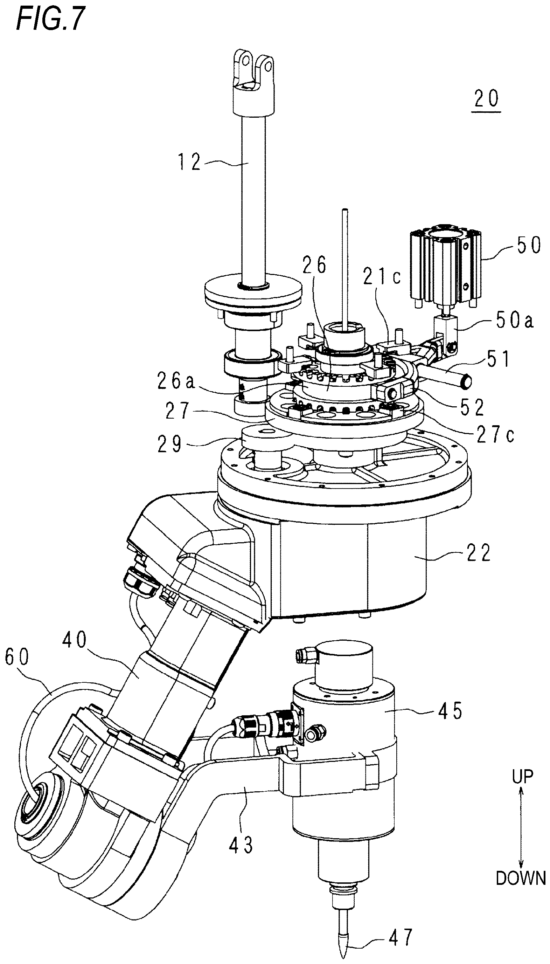

FIG. 7 is a perspective view of the main shaft unit with a first housing omitted.
FIG. 8 is a partially enlarged perspective view of the dog clutch, the first engaging portion, and the second engaging portion in a state were the first engaging portion is engaged between upper teeth.
FIG. 9 is a partially enlarged perspective view of the dog clutch, the first engaging portion, and the second engaging portion in a state were the second engaging portion is engaged between lower teeth.
FIG. 10 is a partially enlarged perspective view of the dog clutch, the first engaging portion, and the second engaging portion during switching to rotation about an A axis or a C axis.
FIG. 11 is a partially enlarged longitudinal cross-sectional view of the dog clutch, the first engaging portion, and the second engaging portion in a state were rotation about the C axis is switched to rotation about the A axis.
FIG. 12 is a schematic cross-sectional perspective view of the main shaft unit in a state were a dog of a second embodiment moves downward.
FIG. 13 is a schematic longitudinal cross-sectional view of the main shaft unit in a state were the dog moves downward.
FIG. 14 is a schematic cross-sectional perspective view of the main shaft unit in a state were the dog moves upward.
FIG. 15 is a schematic longitudinal cross-sectional view of the main shaft unit in a state were the dog moves upward.
FIG. 16 is a schematic longitudinal cross-sectional view of a main shaft unit in a state were a dog clutch of a third embodiment is engaged with a housing.
FIG. 17 is a schematic partial enlarged longitudinal cross-sectional view of the main shaft unit in a state were the dog clutch is engaged with the housing.
FIG. 18 is a schematic partial enlarged longitudinal cross-sectional perspective view of the main shaft unit seen from above in a state were the dog clutch is engaged with the housing.
FIG. 19 is a schematic partial enlarged longitudinal cross-sectional perspective view of the main shaft unit seen from below in a state were the dog clutch is engaged with the housing.
FIG. 20 is a schematic partial enlarged longitudinal cross-sectional perspective view of the main shaft unit seen from above in a state were the dog clutch is engaged with an internal gear.
FIG. 21 is a schematic partial enlarged longitudinal cross-sectional perspective view of the main shaft unit seen from below in a state were the dog clutch is engaged with the internal gear.

### DESCRIPTION OF EMBODIMENTS

The present invention will be described below based on drawings illustrating a machine tool of a first embodiment. In the following description, up, down, front, back, left, and right shown in the drawings are used.

The machine tool includes a holding base 1. An upper surface of the holding base 1 holds a workpiece. A cover 2 is provided around the holding base 1. The cover 2 has a rectangular parallelepiped shape extending vertically, and includes a front face 2a, a right face 2b, a left face 2c, a rear face 2d, and an upper face 2e. A door 3 is provided on the front face 2a, and transparent windows 4 are respectively provided on the right face 2b and the left face 2c.

Three standing pillars 5 extending in an up-down direction are provided inside the cover 2. The three standing pillars 5 are disposed around the holding base 1 with a phase interval of about 120 degrees in plan view. A track 6 extends in the up-down direction and is provided on a side surface of each standing pillar 5 on a holding base 1 side. A moving part 7 and a driving mechanism (not illustrated) are provided on the track 6, and a moving mechanism is composed of a ball screw mechanism or the like. A motor 8 for powering the driving mechanism is provided at an upper end portion of the standing pillar 5. By driving the motor 8, the moving part 7 moves in the up-down direction along the track 6. The motor 8 is provided on the upper face 2e and positioned outside the cover 2.

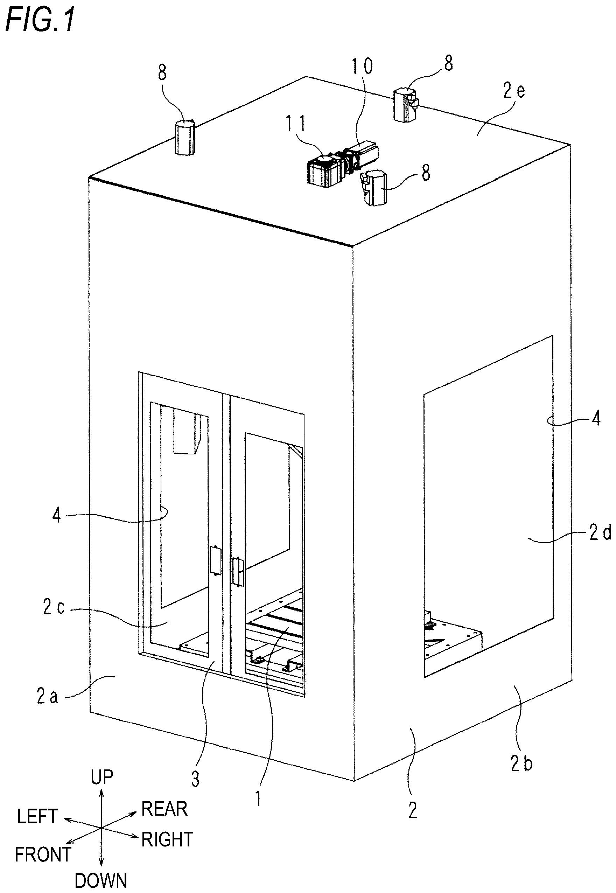

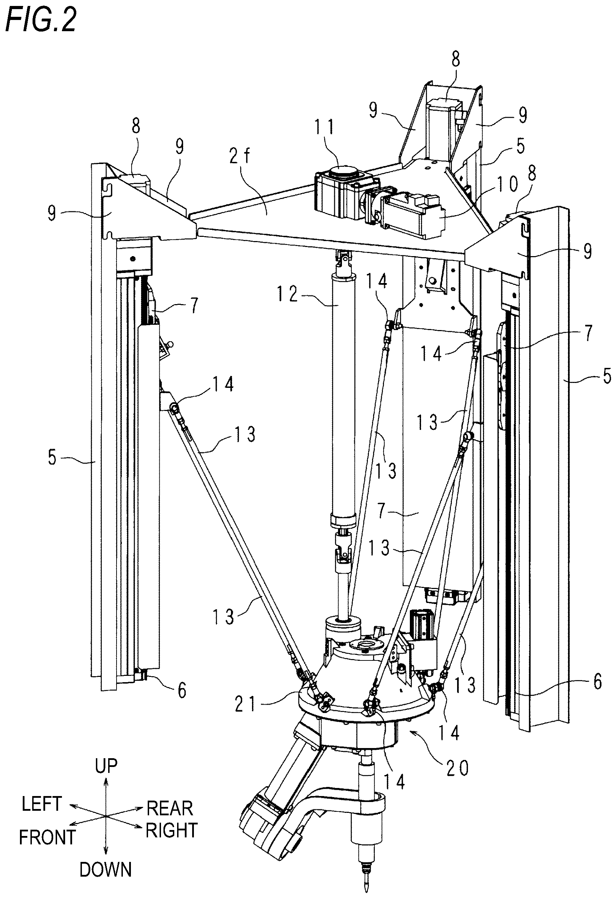

As illustrated in FIG. 2, the upper face 2e includes a support plate 2f with a triangular shape in plan view. The motor 10 and a speed reducer 11 are provided on the support plate 2f. The motor 10 forms a single power source. Upper end portions of the three standing pillars 5 protrude upward from the upper face 2e. The upper end portion and a corner portion of the support plate 2f are connected via a connecting plate 9. In FIG. 1, illustration of the upper end portion, the support plate 2f, and the connecting plate 9 is omitted.

A main shaft unit 20 is disposed above the holding base 1. The main shaft unit 20 is connected to the speed reducer 11 via a ball spline 12 extending vertically. Rotation of the motor 10 is transmitted to the ball spline 12 after being decelerated by the speed reducer 11. The ball spline 12 rotates about an axis.

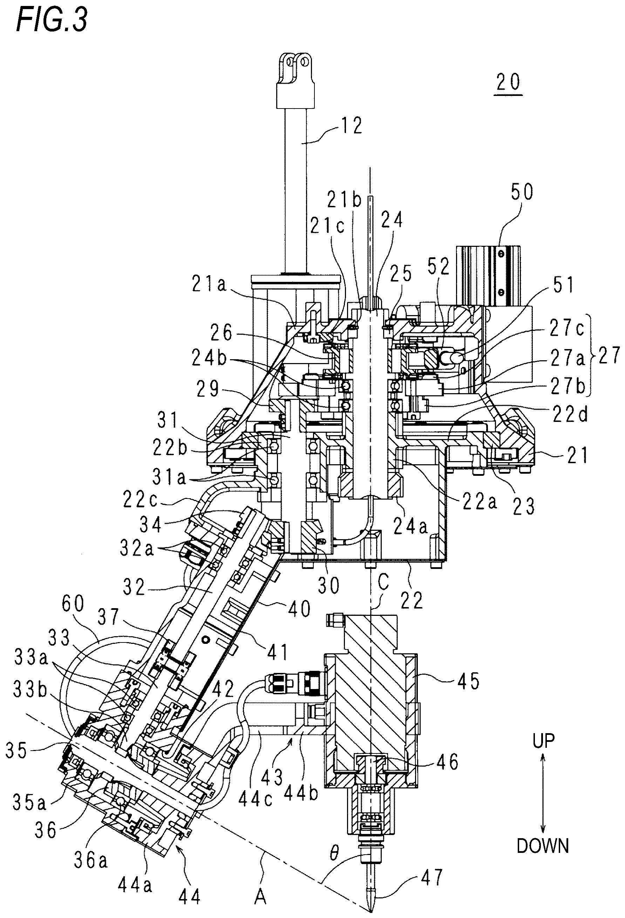

The main shaft unit 20 faces each standing pillar 5. The main shaft unit 20 and the moving part 7 are connected by two links 13 that are parallel with each other. The link 13 is rod-shaped. One side ends of the two links 13 are connected to a first housing 21 (see FIG. 3) of the main shaft unit 20 via joints 14 that are rotatable. The other side ends of the two links 13 are connected to the moving part 7 via joints 14. The joint 14 is a universal joint or the like. By changing up-down positions of the three moving parts 7, the main shaft unit 20 moves up, down, forward, backward, left, and right.

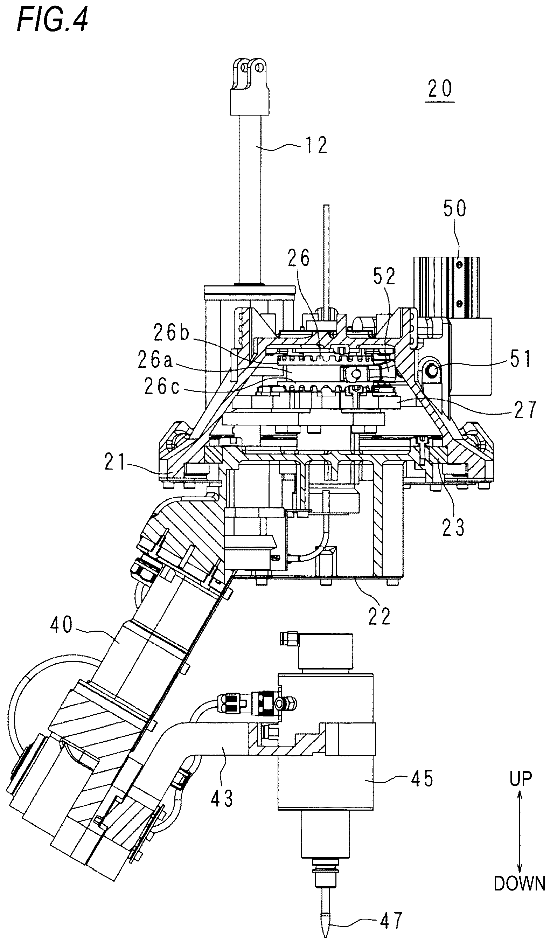

Cutting positions of cutting planes of FIGS. 3 and 4 are different. The main shaft unit 20 includes the first housing 21 having a shape of circular truncated cone. The first housing 21 forms a supporting portion. The first housing 21 is disposed with a small diameter side facing upward and a large diameter side facing downward. An entire lower surface of the first housing 21 is open. The link 13 is connected to a lower edge portion of the first housing 21.

A through hole 21b is formed through the upper face 21a of the first housing 21 in the up-down direction. A first rotating shaft 24 is inserted into the through hole 21b. A sliding bearing 25 is fitted between the first rotating shaft 24 and the through hole 21b. The slide bearing 25 rotatably supports the first rotating shaft 24. The first rotating shaft 24 has a tubular shape, and a wiring 60 is inserted inside the first rotating shaft 24. A plurality of first engaging portions 21c are fixed to a lower side of the upper face 21a of the first housing 21. The plurality of first engaging portions 21c are provided around the through hole 21b at substantially equal intervals in a circumferential direction.

A driving gear 27 is provided approximately in a middle of the first rotating shaft 24. The driving gear 27 is a two-stage gear, and the two-stage gear includes a small diameter gear 27b and a large diameter gear 27a. The small diameter gear 27b is positioned on a lower side, and the large diameter gear 27a is positioned on an upper side. The first rotating shaft 24 is inserted into a center hole of the driving gear 27. Between the first rotating shaft 24 and the driving gear 27, two bearings 24b are fitted with the up-down direction being an axial direction. The two bearings 24b are disposed vertically and support the first rotating shaft 24 and the driving gear 27 to be rotatable. Rotation of the ball spline 12 is transmitted to the large diameter gear 27a.

The driving gear 27 includes a plurality of second engaging portions 27c. The second engaging portion 27c is fixed to an upper surface of the large diameter gear 27a and provided at approximately equal intervals in the circumferential direction of the first rotating shaft 24. A dog clutch 26 is provided between the upper face 21a of the first housing 21 and the driving gear 27. The dog clutch 26 has a short cylindrical shape in the axial direction, and is disposed with the up-down direction as the axial direction. A groove 26a having an annular shape and extending in the circumferential direction is formed in an axially central portion of an outer peripheral surface of the dog clutch 26. The dog clutch 26 is made of a thermoplastic resin material such as a resin material containing polyoxymethylene.

An upper edge portion of the dog clutch 26 is provided with a plurality of upper teeth 26b protruding upward, and a lower edge portion is provided with a plurality of lower teeth 26c protruding downward. The dog clutch 26 is provided outside the first rotating shaft 24. That is, the first rotating shaft 24 is inserted inside the dog clutch 26. A key groove is provided on one side of an outer peripheral surface of the first rotating shaft 24 and an inner peripheral surface of the dog clutch 26, and a key that fits into the key groove is provided on the other side (neither is illustrated). An axial dimension of the key groove is longer than the key, and the key can move up and down along the key groove. A circumferential dimension of the key groove is substantially the same as that of the key. That is, the dog clutch 26 is circumferentially fixed to the first rotating shaft 24 and is axially movable.

A second housing 22 is provided at a lower surface opening of the first housing 21. The second housing 22 has a cylindrical shape with a hollow interior, and is disposed with the up-down direction being an axial direction. An upper edge portion of the second housing 22 is disposed inside a lower edge portion of the first housing 21. A cross roller bearing 23 is provided between the upper edge portion of the second housing 22 and the lower edge portion of the first housing 21. The cross roller bearing 23 rotatably supports the second housing 22. The second housing 22 rotates around a vertical axis.

A first support cylinder 22a is formed in a center of an upper surface of the second housing 22. The first support cylinder 22a extends upwardly and downwardly from the upper face 22d of the second housing 22 to vertically pass through the upper face 22d. A lower part of the first rotating shaft 24 is inserted inside the first support cylinder 22a. A key groove is provided on one side of an outer peripheral surface of the first rotating shaft 24 and an inner peripheral surface of the first support cylinder 22a, and a key that fits into the key groove is provided on the other side (neither is illustrated). An axial dimension and a circumferential dimension of the key groove and the key are substantially the same, and the key groove and the key fix the first support cylinder 22a to the first rotating shaft 24 in the axial direction and the circumferential direction. A lower end portion of the first rotating shaft 24 protrudes downward from the first support cylinder 22a. A fixing member 24a having a cylindrical shape is attached to an outer circumference of a lower end portion of the first rotating shaft 24. The fixing member 24a fixes lower end portions of the first support cylinder 22a and the first rotating shaft 24.

A second support cylinder 22b is formed on the upper face 22d of the second housing 22. The second support cylinder 22b is positioned next to the first support cylinder 22a in a radial direction. The second support cylinder 22b protrudes downward from the upper face 22d and is located inside the second housing 22. An upper end portion opening of the second support cylinder 22b passes through the upper face 22d. A first intermediate shaft 31 is inserted into the second support cylinder 22b. Two bearings 31a are provided between a substantially middle portion of the first intermediate shaft 31 and the second support cylinder 22b, an axial direction of which is the up-down direction. The two bearings 31a are disposed vertically and support the first intermediate shaft 31 rotatably. The second housing 22, the first rotating shaft 24, the first support cylinder 22a, the second support cylinder 22b, and the like form a rotating portion.

An upper end portion of the first intermediate shaft 31 protrudes upward from the second support cylinder 22b. A spur gear 29 having an axial direction extending in the up-down direction is fitted to the upper end portion. The spur gear 29 meshes with the small diameter gear 27b of the driving gear 27. The spur gear 29 and the small diameter gear 27b form a first gear mechanism. A lower end portion of the first intermediate shaft 31 is positioned near a lower surface portion of the second housing 22. A bevel gear 30 is fitted to the lower end portion.

A part of a peripheral surface portion of the second housing 22 protrudes radially outward and obliquely downward. The protruding part is hereinafter referred to as a protruding portion 22c. A lower end of the protruding portion 22c is open. The protruding portion 22c is positioned next to the second support cylinder 22b. A lower end of the protruding portion 22c connects a first arm 40. An angle formed by the protruding portion 22c and a peripheral surface portion of the second housing 22 is an acute angle, for example, about 30 degrees.

The first arm 40 includes a housing 41 having a cylindrical shape with a bottom. An opening portion of the housing 41 is connected to an opening portion of the protruding portion 22c. The housing 41 extends in the same direction as a protruding direction of the protruding portion 22c. An upper portion of the housing 41 accommodates a second intermediate shaft 32 and two bearings 32a. The second intermediate shaft 32 extends in the same direction as the protruding direction. An axial direction of the bearing 32a is the protruding direction. The two bearings 32a are aligned in the protruding direction and support the second intermediate shaft 32. A bevel gear 34 is fitted to an upper end portion of the second intermediate shaft 32. The bevel gear 34 meshes with the bevel gear 30 of the first intermediate shaft 31. The two bevel gears 30 and 34 form the first gear mechanism.

A central portion of the housing 41 accommodates a third intermediate shaft 33 and two bearings 33 a. The third intermediate shaft 33 extends in the same direction as the protruding direction. An axial direction of the bearing 33a is the protruding direction. The two bearings 33a are aligned in the protruding direction and support the third intermediate shaft 33. A coupling 37 connects an upper end portion of the third intermediate shaft 33 and a lower end portion of the second intermediate shaft 32. A lower end portion of the third intermediate shaft 33 forms a hypoid pinion 33b.

An opening 42 is formed in the side surface of a lower end portion of the housing 41. The opening 42 is located on the second housing 22 side. A lower end portion of the housing 41 accommodates a second rotating shaft 35. The second rotating shaft 35 extends in a direction (hereinafter referred to as orthogonal direction) orthogonal to the protruding direction and passes through the lower end portion of the housing 41. One end portion of the second rotating shaft 35 protrudes from the opening 42. The second rotating shaft 35 has a cylindrical shape, and the wiring 60 is inserted inside the second rotating shaft 35. The second rotating shaft 35 forms a second rotating portion.

The lower end portion of the housing 41 accommodates a first bearing 35a, a second bearing 36a, and a hypoid gear 36. The first bearing 35a is located on an opposite side of the opening 42 and supports the other end of the second rotating shaft 35. The second bearing 36a is positioned between the first bearing 35a and the opening 42, and supports an outer peripheral side of the hypoid gear 36. The second rotating shaft 35 is inserted into the hypoid gear 36, and the hypoid gear 36 is fixed to a central portion of the second rotating shaft 35. The hypoid gear 36 is connected to the second rotating shaft 35 and meshes with the hypoid pinion 33b. The hypoid gear 36 and the hypoid pinion 33b form a second gear mechanism.

A reduction ratio of the hypoid gear 36 and the hypoid pinion 33b is higher than that of the two bevel gears 30 and 34, and higher than that of the spur gear 29 and the small diameter gear 27b. A worm wheel may be used instead of the hypoid gear 36, and a worm gear may be used instead of the hypoid pinion 33b. Even then, a reduction ratio of the worm wheel and the worm gear is higher than that of the two bevel gears 30 and 34, and higher than that of the spur gear 29 and the small diameter gear 27b.

A second arm 43 is connected to a peripheral edge portion of the opening 42. The second arm 43 includes an arm portion 44 and a support cylinder 45. The arm portion 44 is bent at a center of a rod and includes a first portion 44a extending in a direction parallel to the housing 41 and a second portion 44b extending in a direction transverse to the first portion 44a. One end portion of the first portion 44a and one end portion of the second portion 44b are integrally connected. The other end portion of the first portion 44a faces the peripheral edge portion of the opening 42. One end portion of the second rotating shaft 35 protruding from the opening 42 is fixed to the other end portion of the first portion 44a.

A through hole 44c for inserting the wiring 60 is formed in the second portion 44b. The support cylinder 45 is provided at the other end portion of the second portion 44b. The support cylinder 45 is disposed so that an axis of the support cylinder 45 and an axis of the first rotating shaft 24 match. The support cylinder 45 coaxially supports a main shaft 46 inside thereof. A motor 48 is provided at an upper end portion of the support cylinder 45. A tool 47 is attached to a lower end portion of the main shaft 46. The motor 48 supplies power to the main shaft 46 to rotate the main shaft 46 and the tool 47. The wiring 60 passes through the second rotating shaft 35 and the through hole 44c, connects to the motor 48, and supplies electric power. The main shaft 46 and tool 47 form an end effector.

As illustrated in FIG. 3, in a state were the axis of the first rotating shaft 24 is set to C, axes of the main shaft 46 and the tool 47 coincide with C. In a state were the axis of the second rotating shaft 35 is set to A, a tip of the tool 47 is positioned on A. That is, the tip of the tool 47 is positioned at an intersection of the axes C and A. An angle θ between the axes C and A is approximately 60 degrees. The angle θ should be 45 degrees or more and 90 degrees or less, preferably 50 degrees or more and 90 degrees or less, and more preferably 55 degrees or more and 80 degrees or less.

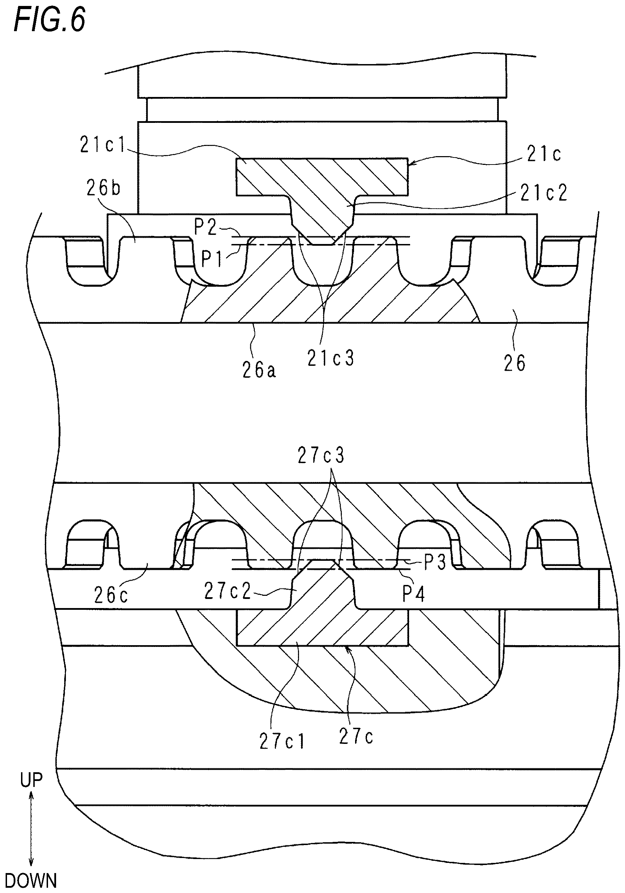

As illustrated in FIG. 6, the first engaging portion 21c includes a fixing portion 21c1 fixed to the upper face 21a of the first housing 21 and a protruding portion 21c2 protruding downward from the fixing portion 21c1. Inclined surfaces 21c3 are formed on both sides of a lower end portion of the protruding portion 21c2 so that a width of the protruding portion 21c2 in a circumferential direction of the dog clutch 26 gradually decreases as the protruding portion 21c2 goes downward. The width of the lower end portion of the protruding portion 21c2 is smaller than a width between the upper teeth 26b.

The second engaging portion 27c includes a fixing portion 27c1 fixed to the upper face of the large diameter gear 27a and a protruding portion 27c2 protruding upward from the fixing portion 27c1. Inclined surfaces 27c3 are formed on both sides of an upper end portion of the protruding portion 27c2 so that a width of the protruding portion 27c2 in the circumferential direction of the dog clutch 26 gradually decreases as the protruding portion 27c2 goes upward. The width of the upper end portion of the protruding portion 27c2 is smaller than a width between the lower teeth 26c.

An air cylinder 50 is attached outside the first housing 21. The air cylinder 50 includes a rod 50a of which an axial direction is the up-down direction. The rod 50a protrudes downward from the air cylinder 50 and is moved up and down by air pressure. A fork 52 having a bifurcated shape is attached to a lower end of the rod 50a. A base end portion of the fork 52 is rotatably connected to a lower end of the rod 50a with a radial direction of the dog clutch 26 as a rotational axis direction. A bifurcated portion of the fork 52 engages the groove 26a. The bifurcated portion of the fork 52 is located inside the first housing 21, and the base end portion of the fork 52 penetrates the first housing 21 in a radial direction of the dog clutch 26.

A support shaft 51 extending in the radial direction of the dog clutch 26 is provided inside the first housing 21. The support shaft 51 passes through a middle portion of the base end portion of the fork 52. The support shaft 51 supports the fork 52 rotatably around an axis.

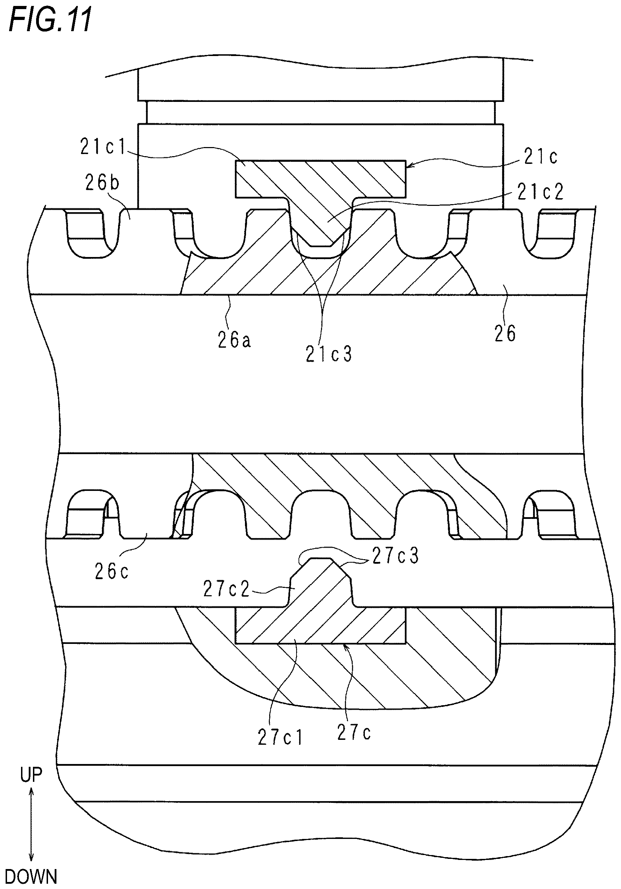

In a state were the rod 50a moves downward, the bifurcated portion of the fork 52 moves upward with the support shaft 51 as a fulcrum, and the first engaging portion 21c engages between the upper teeth 26b of the dog clutch 26 (see FIG. 11). In a state were the rod 50a moves upward, the bifurcated portion of the fork 52 moves downward with the support shaft 51 as a fulcrum, and the second engaging portion 27c engages between the lower teeth 26c of the dog clutch 26. The upper teeth 26b form first teeth and the lower teeth 26c form second teeth. The air cylinder 50, the rod 50a, the support shaft 51, and the fork 52 form the moving mechanism.

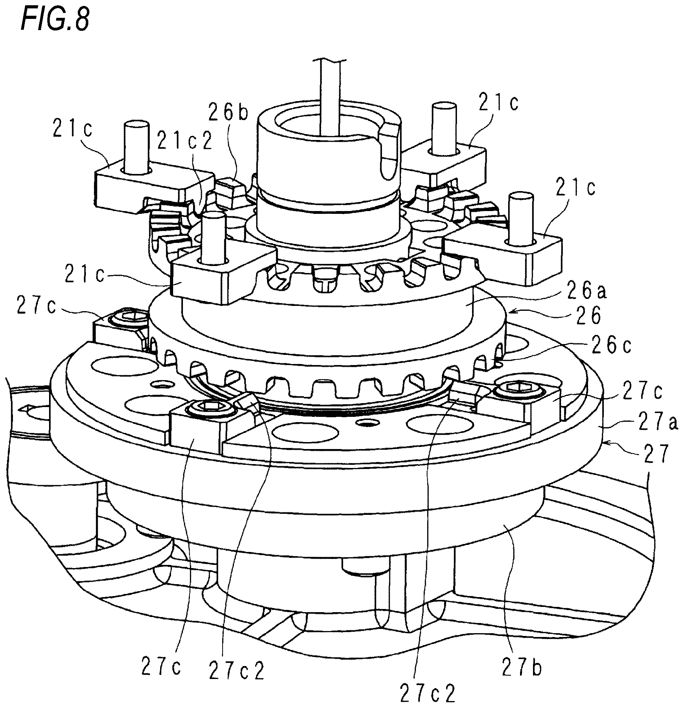

In FIG. 8, the first housing 21, the air cylinder 50, and the fork 52 are omitted. The dog clutch 26, the first rotating shaft 24, and the second housing 22 are fixed to the first housing 21 in a state were the bifurcated portion of the fork 52 moves upward and the first engaging portion 21c engages between the upper teeth 26b. The second engaging portion 27c is not engaged between the lower teeth 26c of the dog clutch 26.

The ball spline 12 is rotated by the rotation of the motor 10, and the rotation is transmitted to the large diameter gear 27a, and then the driving gear 27 is rotated. The spur gear 29 meshing with the small diameter gear 27b rotates, and the first intermediate shaft 31, the bevel gears 30 and 34, the second intermediate shaft 32, and the third intermediate shaft 33 rotate. The hypoid pinion 33b at a lower end of the third intermediate shaft 33 rotates, and the hypoid gear 36 rotates. The second rotating shaft 35 and the second arm 43 rotate around an axis A together with the hypoid gear 36. Hereinafter, the axis A will also be referred to as an A axis. The A axis forms a second axis. The dog clutch 26, the first rotating shaft 24, and the second housing 22 are fixed to the first housing 21 to not rotate.

The second rotating shaft 35, the hypoid gear 36, the hypoid pinion 33b, the first intermediate shaft 31, the second intermediate shaft 32, the third intermediate shaft 33, the spur gear 29, and the small diameter gear 27b form a transmission mechanism. The transmission mechanism, the driving gear 27, the dog clutch 26, the first engaging portion 21c, and the second engaging portion 27c form a switching mechanism.

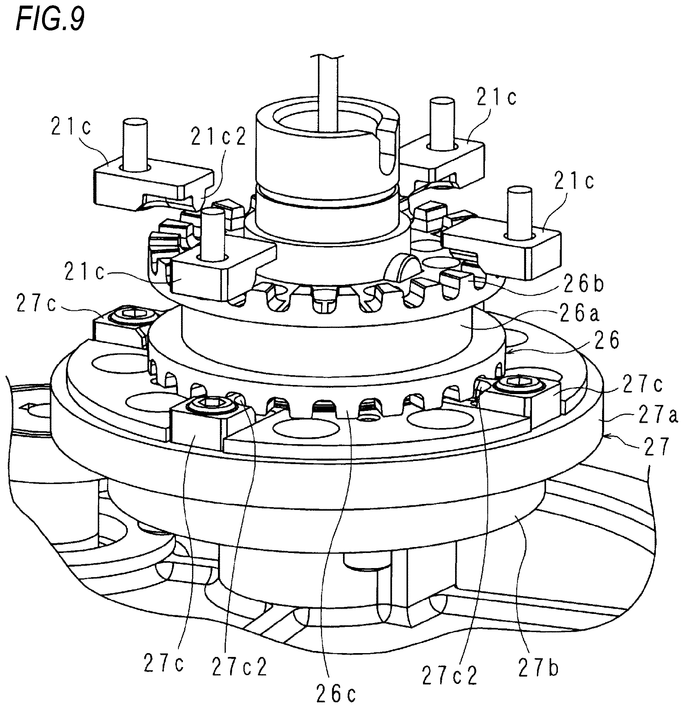

In FIG. 9, the first housing 21, the air cylinder 50, and the fork 52 are omitted. The dog clutch 26, the first rotating shaft 24, and the second housing 22 are connected to the driving gear 27 in a state were the bifurcated portion of the fork 52 moves downward and the second engaging portion 27c engages between the lower teeth 26c. Rotation of the ball spline 12 is transmitted to the driving gear 27, and the first rotating shaft 24, the second housing 22, the first arm 40, and the second arm 43 rotate around an axis C together with the driving gear 27. Hereinafter, the axis C will also be referred to as a C axis. The C axis forms a first axis. Since the first intermediate shaft 31, the second intermediate shaft 32, the third intermediate shaft 33, and the second rotating shaft 35 also rotate around the C axis together with the driving gear 27, the first intermediate shaft 31, the second intermediate shaft 32, the third intermediate shaft 33, and the second rotating shaft 35 themselves do not rotate, and the second arm 43 does not rotate around the A axis.

When switching from rotation about the A axis to rotation about the C axis, the dog clutch 26 moves downward. In a state were the second engaging portion 27c is not positioned between the lower teeth 26c, the lower teeth 26c comes into contact with the inclined surface 27c3 of the second engaging portion 27c. The driving gear 27 rotates around the C axis by a force acting on the inclined surface 27c3 from the lower teeth 26c, and the protruding portion 27c2 of the second engaging portion 27c is positioned between the lower teeth 26c. As illustrated in FIG. 6, when switching from rotation around the A axis to rotation around the C axis, an upper end position P3 of the protruding portion 27c2 is above a lower end position P4 of the lower teeth 26c and the second engaging portion 27c is positioned between the lower teeth 26c, and further a lower end position P1 of the protruding portion 21c2 is below an upper end position P2 of the upper teeth 26b and the first engaging portion 21c is continuously positioned between the upper teeth 26b from before the rotation is switched.

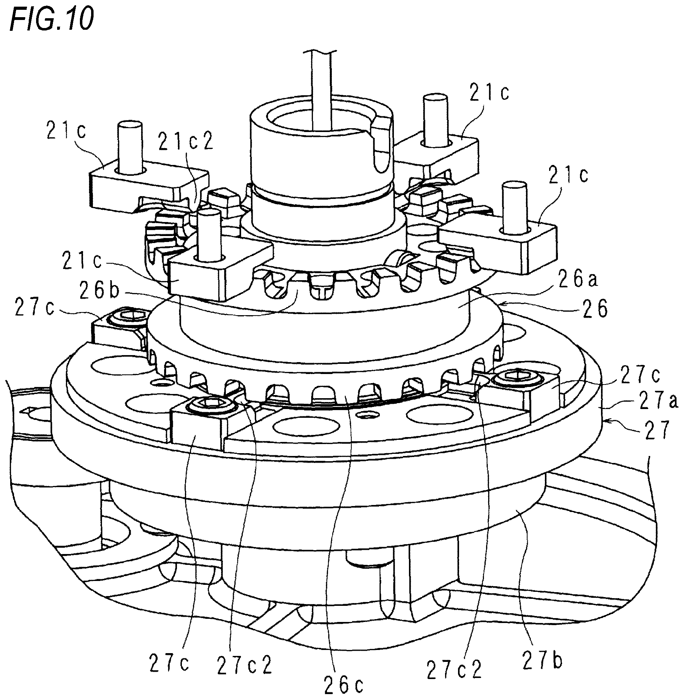

As illustrated in FIGS. 10 and 11, when switching from rotation about the C axis to rotation about the A axis, the dog clutch 26 moves upward. In a state were the first engaging portion 21c is not positioned between the upper teeth 26b, the upper teeth 26b comes into contact with the inclined surface 21c3 of the first engaging portion 21c. The driving gear 27 rotates around the C axis by a force acting on the inclined surface 21c3 from the upper teeth 26b, and the protruding portion 21 c2 of the first engaging portion 21c is positioned between the upper teeth 26b. As illustrated in FIG. 6, when switching from rotation around the C axis to rotation around the A axis, the lower end position P1 of the protruding portion 21c2 is below the upper end position P2 of the upper teeth 26b and the first engaging portion 21c is positioned between the upper teeth 26b, and further the upper end position P3 of the protruding portion 27c2 is above the lower end position P4 of the lower teeth 26c and the second engaging portion 27c is continuously positioned between the lower teeth 26c from before the rotation is switched.

That is, in the middle of switching to rotation around the A axis or C axis, the first engaging portion 21c engages between the upper teeth 26b, and the second engaging portion 27c engages between the lower teeth 26c. Therefore, it is possible to prevent occurrence of step-out while switching between rotations.

Although the first intermediate shaft 31, the second intermediate shaft 32, the third intermediate shaft 33, and the second rotating shaft 35 are provided inside the second housing 22 and the housing 41, the shafts may be provided outside the second housing 22 and the housing 41 to transmit power to the second arm 43.

The first arm 40 of the machine tool of the first embodiment is provided in the second housing 22 and rotates together with the second housing 22 around the C axis. The second arm 43 rotates around the A axis. A single motor 10 powers either the first rotating shaft 24 or the second rotating shaft 35 via a switching mechanism. Since there is no motor that drives only the second rotating shaft 35, an increase in centrifugal force that occurs in a state were the machine tool rotates around the C axis is reduced, and a path error of the tool 47 is reduced.

In a state were the dog clutch 26 fixes the first rotating shaft 24, the second housing 22, and the like to the first housing 21, the power from the motor 10 is transmitted to the second arm 43 by the transmission mechanism such as the first intermediate shaft 31, the second intermediate shaft 32, the third intermediate shaft 33, and the second rotating shaft 35, and the driving gear 27. As a result, the second arm 43 rotates around the A axis. In a state were the dog clutch 26 is connected to the driving gear 27, power is transmitted to the first rotating shaft 24, the second housing 22, and the like, and the second housing 22, the first arm 40, and the second arm 43 rotate around the C axis.

Since the dog clutch 26 is engaged with at least one of the first engaging portion 21c and the second engaging portion 27c when switching a power supply destination, the machine tool can prevent step-out between the dog clutch 26 and the first engaging portion 21c and the second engaging portion 27c.

The hypoid pinion 33b and the hypoid gear 36 (second gear mechanism) with a higher reduction ratio than that of the two bevel gears 30, 34 and that of the spur gear 29 and the small diameter gear 27b (first gear mechanism) are provided between the second rotating shaft 35 (second rotating portion) and the third intermediate shaft 33. The machine tool can adjust a position error caused by backlash of the first gear mechanism with the second gear mechanism.

Since the machine tool includes the motor 10 (power source), which is a heat generating source, outside the cover 2, dust explosion or the like inside the cover 2 is prevented, and safety is enhanced. Maintenance of the motor 10 is facilitated.

Since the angle between the C axis and the A axis is 45 degrees or more and 90 degrees or less, a rotation range of the tool 47 around the A axis can be increased. Therefore, the machine tool can deburr an edge of a hole by inserting the tool 47 into the hole formed in an upper part of a workpiece, and the tool 47 can be inserted into a hole formed in a lower part of the workpiece to deburr an edge of the hole.

In a state were the angle between the C axis and the A axis is less than 45 degrees, the machine tool can work on the upper and right or upper and left parts of the workpiece, but not the lower part. That is, by setting the angle between the C axis and the A axis to 45 degrees or more and 90 degrees or less, the machine tool can increase a range of workpiece that can be worked on.

Since the tip of the tool 47 is located at the intersection of the C axis and the A axis, when positioning around the C axis or A axis, the tip of the tool 47 is firmly supported by the bearings 24b, 35a, and the like that support the second rotating shaft 35, the first rotating shaft 24, and the like, so that the position of the tip of the tool 47 always stays in the same position. Therefore, even in a state were a gear mechanism is used for rotation around the C axis and the A axis, the machine tool prevents an influence of a load acting on the tool 47 during machining on machining accuracy, and thus machining defects such as chatter caused by backlash can be prevented.

Even in a state were the tip of the tool 47 is not located at the intersection of the A axis and the C axis, in a state were a starting torque of the second rotating shaft 35 around the A axis is set to T, a component of a cutting load acting on the tool 47 around the A axis is set to F, and a shortest distance between the A axis and the tip of the tool 47 is set to L, if a relationship "T > F × L" is established, the machine tool can prevent an influence of the load acting on the tool 47 during machining on the machining accuracy, and prevent occurrence of machining defects such as chatter due to backlash. A similar effect is obtained in a state were the tip of the tool 47 is positioned at the intersection of the A axis and the C axis and the above-described relationship is established. Here, L becomes 0. The cutting load is a load in a state were a workpiece with a largest assumed load is machined with a tool with a largest load.

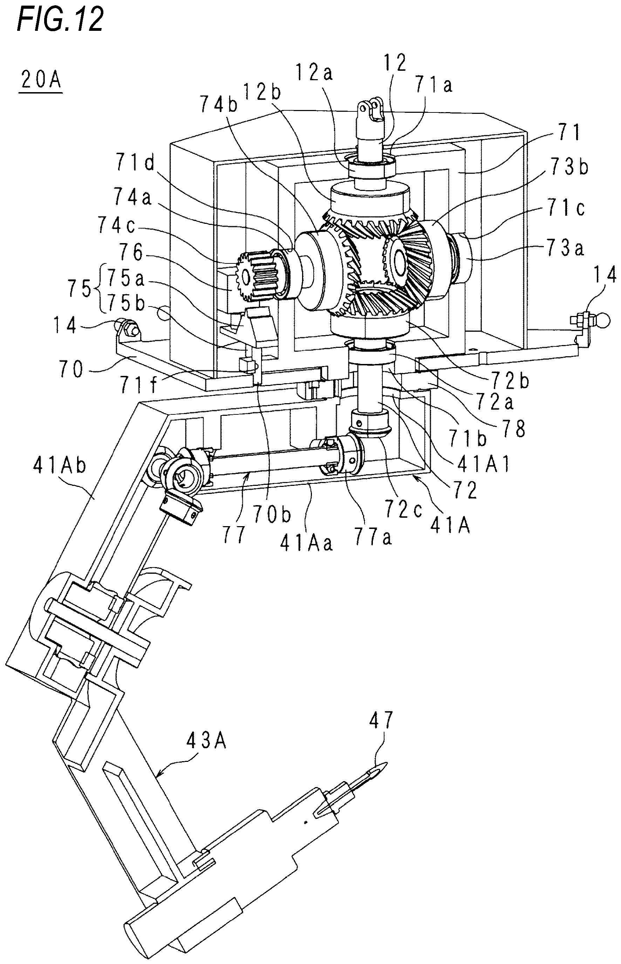

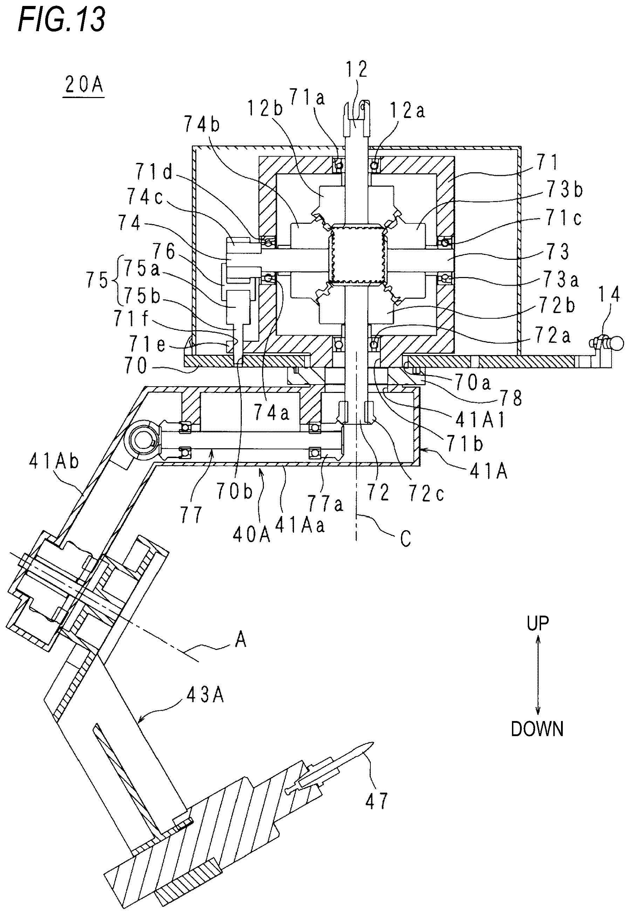

Among configurations of a second embodiment, the configurations similar to those of the first embodiment are denoted by the same reference numerals, and detailed description thereof will be omitted. As illustrated in FIGS. 12 and 13, a main shaft unit 20A includes a support plate 70 extending horizontally. The support plate 70 is connected via the joint 14 to the link 13 (see FIG. 2). A through hole 70a penetrating vertically is formed in a center of the support plate 70. A second insertion hole 70b penetrating vertically is formed at a location apart from the through hole 70a. The second insertion hole 70b is located below a first insertion hole 71f, which will be described below.

A support frame 71 having a rectangular cylindrical shape is provided on an upper side of the support plate 70. An upper insertion hole 71a penetrating vertically is formed in an upper part of the support frame 71, and a lower insertion hole 71b penetrating vertically is formed in a lower part of the support frame 71. A peripheral edge portion of the lower insertion hole 71b protrudes downward and is inserted into the through hole 70a.

A lateral insertion hole 71c penetrating in a horizontal direction is formed in one side portion (the right portion in FIG. 13) of the support frame 71, and a horizontal insertion hole 71d is formed in the other side portion (the left portion in FIG. 13) of the support frame 71. A protruding portion 71e protruding radially outwardly of the support frame 71 from a lower portion of the support frame 71 is provided below the lateral insertion hole 71d. A first insertion hole 71f is formed vertically through the protruding portion 71e. The first insertion hole 71f and the second insertion hole 70b are coaxially disposed vertically.

The ball spline 12 is inserted from above into the upper insertion hole 71a. Inside the upper insertion hole 71a, the ball spline 12 is supported by a bearing 12a of which a rotational axis direction is the up-down direction. A bevel gear 12b is provided at a lower end portion of the ball spline 12 and positioned inside the support frame 71.

A lower shaft 72 extending vertically is inserted from below into the lower insertion hole 71b. Inside the lower insertion hole 71b, a bearing 72a with the up-down direction as its rotational axis direction supports a middle portion of the lower shaft 72. A bevel gear 72b is provided on an upper end portion of the lower shaft 72, and the upper end portion of the lower shaft 72 and the bevel gear 72b are positioned inside the support frame 71. A bevel gear 72c is provided at a lower end portion of the lower shaft 72, and the lower end portion of the lower shaft 72 and the bevel gear 72c are positioned outside the support frame 71.

A lateral shaft 73 extending in the horizontal direction is inserted into the lateral insertion hole 71c. One end portion of the lateral shaft 73 is positioned inside the lateral insertion hole 71c and does not protrude outside the support frame 71 from the lateral insertion hole 71c. The lateral shaft 73 is supported in the lateral insertion hole 71c by a bearing 73a of which a rotational axis direction is the horizontal direction. The other end portion of the lateral shaft 73 is located inside the support frame 71 and is provided with a bevel gear 73b. The bevel gear 73b meshes with the bevel gears 72b and 12b.

A lateral shaft 74 extending in the horizontal direction is inserted into the lateral insertion hole 71d. One end portion of the lateral shaft 74 protrudes outside the support frame 71 through the lateral insertion hole 71d, and the other end portion protrudes inside the support frame 71 through the lateral insertion hole 71d. A bearing 74a with the horizontal direction as the rotation axis direction supports a substantially middle portion of the lateral shaft 74 in the lateral insertion hole 71d. A bevel gear 74b is provided at the other end portion of the lateral shaft 74 and meshes with the two bevel gears 72b and 12b.

One end portion of the lateral shaft 74 is provided with a locking gear 74c. A dog 75 is provided below the locking gear 74c. The dog 75 includes a pin 75b extending vertically and a locking portion 75a formed at an upper end of the pin 75b. The pin 75b is positioned on a central axis of the first insertion hole 71f and the second insertion hole 70b. The locking portion 75a includes an upwardly pointed portion that can be locked with the locking gear 74c. An air cylinder 76 disposed outside the support frame 71 moves the dog 75 up and down. FIGS. 12 and 13 illustrate a state in which the dog 75 is moved downward, where the locking portion 75a is not locked to the locking gear 74c, and the pin 75b is inserted into the first insertion hole 71f and the second insertion hole 70b.

A first arm 40A is provided on a lower side of the support plate 70. The first arm 40A includes a first housing portion 41Aa and a second housing portion 41Ab. The first housing portion 41Aa extends horizontally and includes an opening 41A1 formed in an upper surface of one end portion thereof, into which a lower end portion of the lower shaft 72 is inserted. The bevel gear 72c is positioned inside the first housing portion 41Aa, and a cross roller bearing 78 is provided between one end portion of the first housing portion 41Aa and the support plate 70. An outer ring of the cross roller bearing 78 is fixed to a peripheral edge portion of the through hole 70a. An inner ring of the cross roller bearing 78 is connected to a peripheral edge portion of the lower insertion hole 71b and a peripheral edge portion of the opening 41A1.

The second housing portion 41Ab extends obliquely downward from the other end portion of the first housing portion 41Aa and extends outward in the radial direction of the lower shaft 72. A second arm 43A is connected to a lower end portion of the second housing portion 41Ab. The second arm 43Aholds the tool 47. The ball spline 12 and the lower shaft 72 are located on the C axis.

A transmission mechanism 77 is installed inside the first housing portion 41Aa and the second housing portion 41Ab. The transmission mechanism 77 includes a bevel gear 77a that meshes with the bevel gear 72c. The transmission mechanism 77 transmits rotation of the bevel gear 72c to the second arm 43A, and the second arm 43A rotates around the A axis.

As illustrated in FIGS. 12 and 13, in a state were the dog 75 moves downward, that is, in a state were the locking portion 75a is not locked to the locking gear 74c and the pin 75b is inserted into the first insertion hole 71f and the second insertion hole 70b, the support frame 71 is connected to the support plate 70. The ball spline 12 rotates, and the four bevel gears 12b, 72b, 73b, and 74b rotate, and further the lower shaft 72 and the bevel gear 72c rotate. The transmission mechanism 77 uses a bevel gear and a hypoid gear or a worm gear to transmit the rotation of the bevel gear 72c to the second arm 43A, and the second arm 43A rotates around the A axis. Since the support frame 71 is connected to the support plate 70, the support frame 71 does not rotate around the C axis.

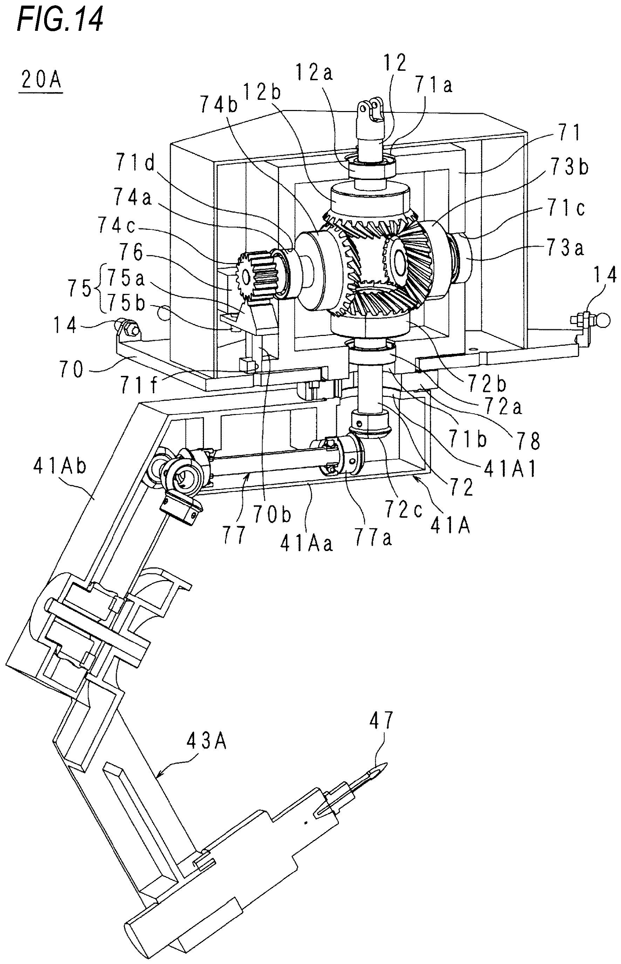

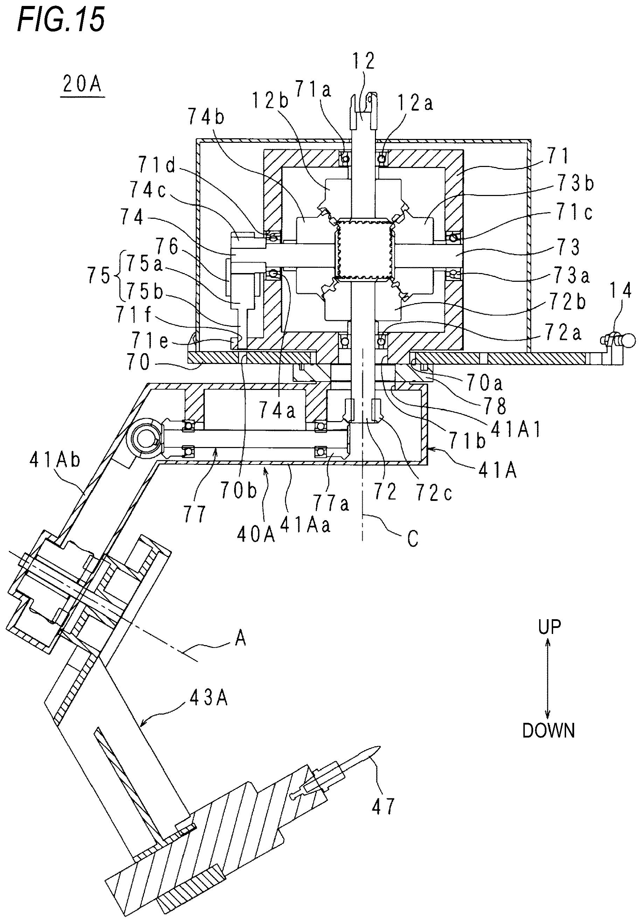

In a state were the dog moves upward (see FIGS. 14 and 15), that is, in a state were the locking portion 75a is locked to the locking gear 74c and the pin 75b is extracted from the first insertion hole 71f and the second insertion hole 70b, the support frame 71 is not connected to the support plate 70.

The locking portion 75a is locked with the locking gear 74c so that when the ball spline 12 rotates, the four bevel gears 12b, 72b, 73b, and 74b do not rotate. Since the support frame 71 is not connected to the support plate 70, the support frame 71, an inner ring of the cross roller bearing 78, the first arm 41A, and the second arm 43A rotate around the C axis. As described above, the four bevel gears 12b, 72b, 73b, and 74b do not rotate, so the second arm 43A does not rotate about the A axis.

The four bevel gears 12b, 72b, 73b, and 74b, the support frame 71, the first insertion hole 71f, the second insertion hole 70b, the lower shaft 72, the bevel gear 72c, the lateral shafts 73 and 74, the locking gear 74c, the dog 75, the cross roller bearing 78, and the transmission mechanism 77 form a transmission gear unit. The second embodiment can realize switching of power supply destinations using the transmission gear unit.

Among configurations of a third embodiment, the configurations similar to those of the first or second embodiment are denoted by the same reference numerals, and detailed descriptions thereof are omitted.

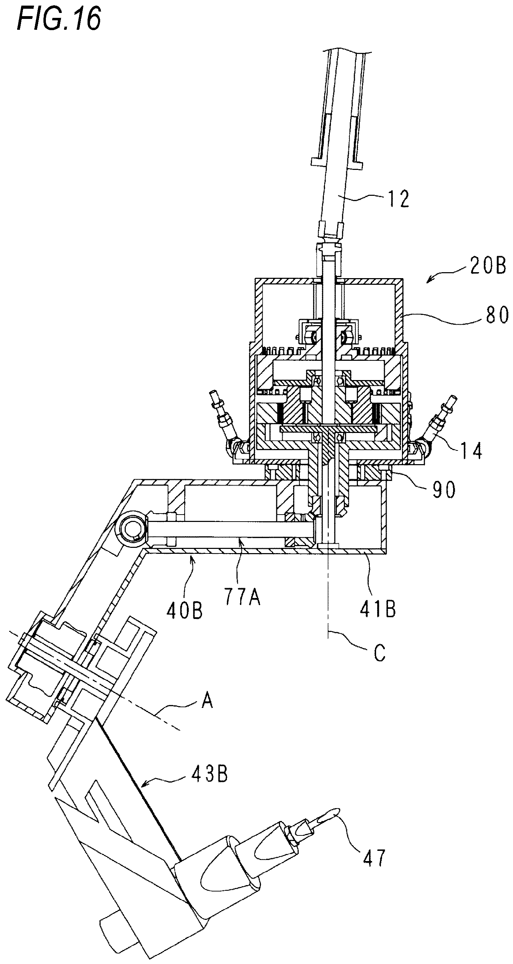

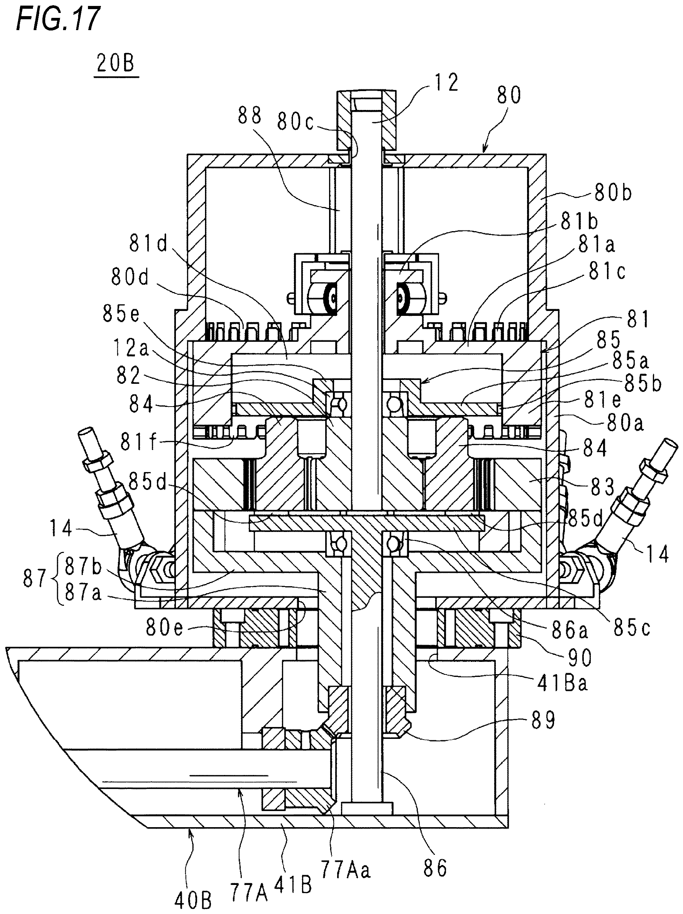

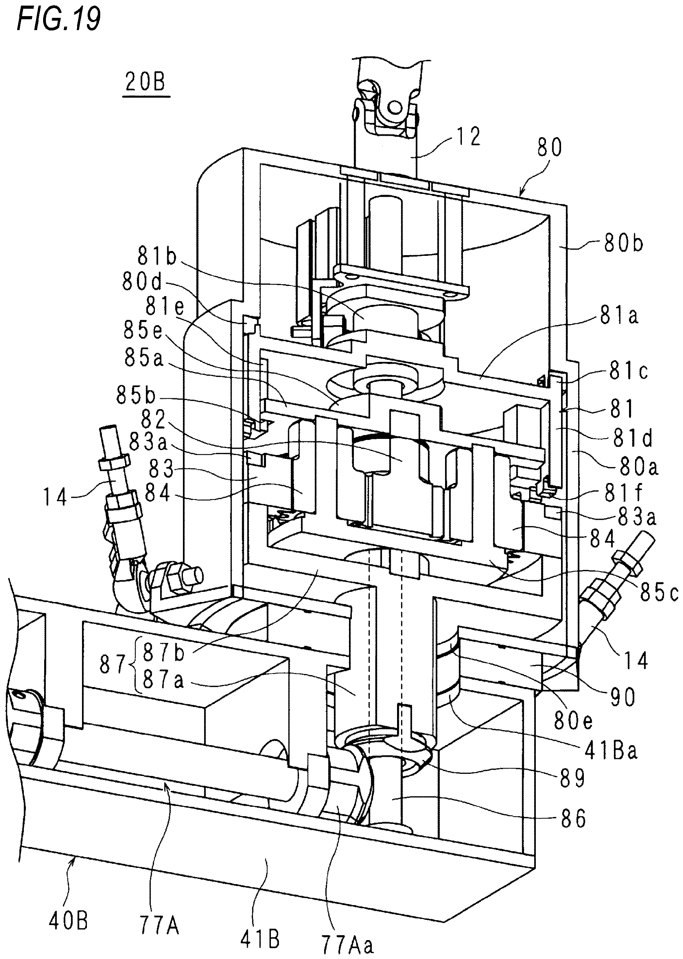

A main shaft unit 20B illustrated in FIGS. 16 to 19 includes a housing 80. The housing 80 has a hollow cylindrical shape. The housing 80 includes a lower housing 80a and an upper housing 80b. The lower housing 80a has a cylindrical shape with a bottom facing downward. A through hole 80e penetrating vertically is provided in a center of a lower surface of the lower housing 80a. The upper housing 80b has a cylindrical shape with a bottom facing upward. The upper housing 80b is disposed coaxially with the lower housing 80a on an upper side of the lower housing 80a. A diameter of the upper housing 80b is shorter than that of the lower housing 80a, and a lower end portion of the upper housing 80b and an upper end portion of the lower housing 80a are connected while forming a step portion. A plurality of teeth 80d are formed in the step portion. The plurality of teeth 80d are disposed in the circumferential direction of the housing 80.

A through hole 80c penetrating vertically is provided in a center of an upper surface of the upper housing 80b. The ball spline 12 is inserted into the through hole 80c.

A dog clutch 81 is accommodated in the lower housing 80a. The dog clutch 81 includes a disk 81a, an upper cylindrical portion 81b, and a lower cylindrical portion 81d. The disk 81a is disposed coaxially with respect to the lower housing 80a with the up-down direction as the axial direction. The upper cylindrical portion 81b penetrates vertically through a central portion of the disk 81a and protrudes upward. The lower cylindrical portion 81d protrudes downward from a peripheral edge portion of the disk 81a. A plurality of upper teeth 81c protruding upward are provided on the peripheral edge portion of the disk 81a. The plurality of upper teeth 81c are disposed in the circumferential direction of the disk 81a. The upper teeth 81c meshes between the teeth 80d.

A plurality of keys 81e are provided on an inner peripheral surface of the lower cylindrical portion 81d. The key 81e protrudes radially inward and extends vertically. The plurality of keys 81e are disposed in the circumferential direction. A plurality of lower teeth 81f protruding downward are provided on a lower edge portion of the lower cylindrical portion 81d. The ball spline 12 is inserted into the upper cylindrical portion 81b and the lower cylindrical portion 81d.

A planetary carrier 85 is provided below the dog clutch 81. The planetary carrier 85 includes an upper plate portion 85a, a lower plate portion 85c, and shaft portions 85d. The upper plate portion 85a has a circular shape in plan view, and is coaxially disposed inside the lower cylindrical portion 81d. A cylindrical portion 85e penetrates through a central portion of the upper plate portion 85a. The cylindrical portion 85e protrudes upward from the upper plate portion 85a, and an upper peripheral edge portion of the cylindrical portion 85e protrudes radially inward. The bearing 12a is provided coaxially inside the cylindrical portion 85e. The ball spline 12 is inserted into the cylindrical portion 85e, and the bearing 12a supports the ball spline 12.

The lower plate portion 85c is provided below the upper plate portion 85a. The lower plate portion 85c has a circular shape in plan view and is disposed coaxially with the upper plate portion 85a. The upper plate portion 85a and the lower plate portion 85c are vertically separated by a predetermined distance. Between the upper plate portion 85a and the lower plate portion 85c, a plurality of shaft portions 85d of which an axial direction is the up-down direction are provided. The plurality of shaft portions 85d are disposed around the ball spline 12 at equal intervals in the circumferential direction. In the radial direction, the shaft portions 85d and the ball spline 12 are separated by a predetermined distance. A lower end portion of the ball spline 12 extends to a position facing an upper surface of the lower plate portion 85c.

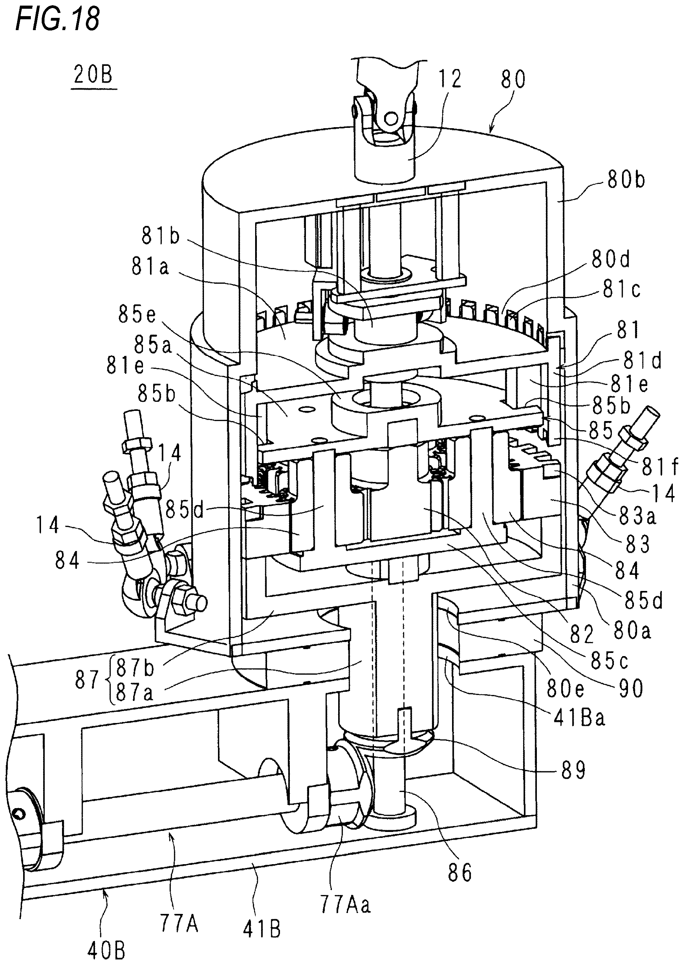

A sun gear 82 is coaxially provided at a lower end portion of the ball spline 12 between the upper plate portion 85a and the lower plate portion 85c. The sun gear 82 rotates with the ball spline 12. A planetary gear 84 is provided on each shaft portion 85d. The planetary gear 84 meshes with the sun gear 82. An internal gear 83 is provided coaxially with respect to the sun gear 82 around the plurality of planetary gears 84. Teeth on an inner peripheral surface of the internal gear 83 mesh with the planetary gear 84. A plurality of teeth 83a are formed on an upper outer peripheral surface of the internal gear 83 (see FIG. 18 and the like). The plurality of teeth 83a mesh between the lower teeth 81f. The internal gear 83 is located between the upper plate portion 85a and the lower plate portion 85c. A diameter of the upper plate portion 85a is slightly larger than the sum of a diameter of the sun gear 82 and twice a diameter of the planetary gear 84, and a diameter of the lower plate portion 85c is substantially equal to the sum of a diameter of the sun gear 82 and twice the diameter of the planetary gear 84.

A transmission body 87 is provided below the internal gear 83. The transmission body 87 has a cylindrical portion 87a and a disk portion 87b. The cylindrical portion 87a is disposed coaxially with the lower plate portion 85c on a lower side of the lower plate portion 85c with the up-down direction being an axial direction. The disk portion 87b radially protrudes from an upper end portion of the cylindrical portion 87a. The disk portion 87b is positioned between the internal gear 83 and a lower surface portion of the lower housing 80a. A diameter of the disk portion 87b is substantially equal to a diameter of the internal gear 83. A peripheral edge portion of the disk portion 87b protrudes upward and is connected to the internal gear 83.

The cylindrical portion 87a is inserted into the through hole 80e from above. A connecting shaft 86 protrudes downward from a radially central portion of the lower plate portion 85c. The connecting shaft 86 is inserted into the cylindrical portion 87a. The connecting shaft 86 is integrated with the lower plate portion 85c. A bearing 86a is provided between an upper end portion of the cylindrical portion 87a and the lower plate portion 85c, with the up-down direction being an axial direction. The bearing 86a supports the connecting shaft 86.

A first arm 40B and a second arm 43B are provided on a lower side of the housing 80. The first arm 40B includes a housing 41B. A through hole 41Ba penetrating vertically is provided on an upper surface of the housing 41B. The through hole 41Ba is disposed coaxially with the through hole 80e. A cross roller bearing 90 is coaxially provided between a peripheral edge portion of the through hole 41Ba and a peripheral edge portion of the through hole 80e.

An outer ring of the cross roller bearing 90 is fixed to a peripheral edge portion of the through hole 80e, and an inner ring is connected to a peripheral edge portion of the through hole 41Ba. The cylindrical portion 87a and the connecting shaft 86 are inserted into the through hole 41Ba from above. A bevel gear 89 is provided at a lower end portion of the cylindrical portion 87a. A lower end portion of the connecting shaft 86 protrudes downward through a hole in the bevel gear 89 and is fixed to an inner lower surface portion of the housing 41B. The connecting shaft 86 is not connected with the cylindrical portion 87a and the bevel gear 89. The ball spline 12 and the connecting shaft 86 are positioned on the C axis.

A transmission mechanism 77A is provided inside the housing 41B. The transmission mechanism 77A has a bevel gear 77Aa that meshes with the bevel gear 89. The configurations of the first arm 40B, the second arm 43B, and the transmission mechanism 77A are the same as those of the first arm 40A, the second arm 43A, and the transmission mechanism 77 of the second embodiment, and detailed description thereof will be omitted. As in the second embodiment, the transmission mechanism 77A transmits rotation of the bevel gear 77Aa to the second arm 43B, and the second arm 43B rotates around the A axis.

The housing 80 includes an air cylinder 88. A driving portion (rod) (not illustrated) of the air cylinder 88 is connected with the dog clutch 81. The dog clutch 81 moves up and down based on driving of the air cylinder 88, and the upper teeth 81c mesh with the teeth 80d or the lower teeth 81f mesh with the teeth 83a.

As illustrated in FIGS. 16 to 19, in a state were the dog clutch 81 moves upward, that is, the upper teeth 81c and the teeth 80d are meshed, the dog clutch 81 is connected to the housing 80, and the lower teeth 81f and the teeth 83a are not meshed. Therefore, the internal gear 83 becomes rotatable. The ball spline 12 rotates, and the sun gear 82, the planetary gear 84, and the internal gear 83 rotate on their own axes. Since the key 81e is engaged with a key groove 85b, the planetary carrier 85 does not rotate. The transmission body 87 rotates together with the internal gear 83, and the second arm 43B and the tool 47 rotate around the A axis via the transmission mechanism 77A.

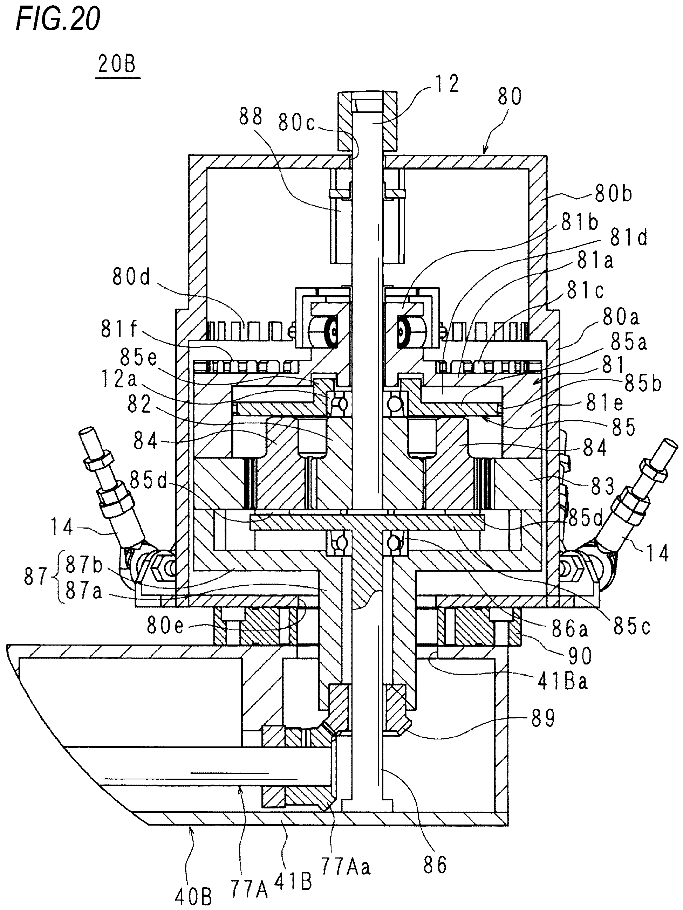

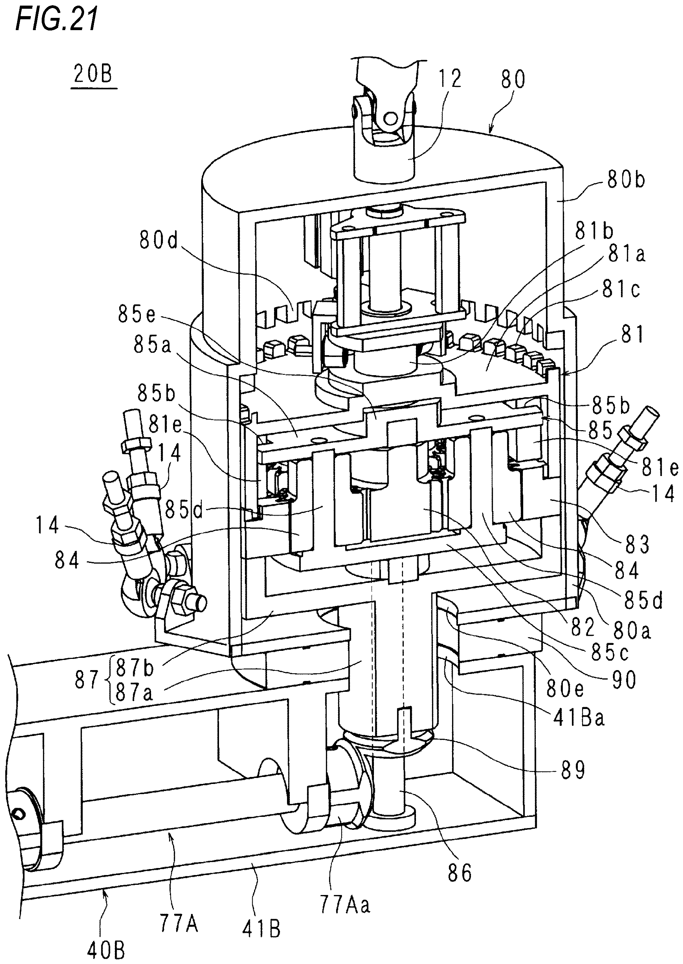

As illustrated in FIGS. 20 and 21, in a state were the dog clutch 81 moves downward, that is, the upper teeth 81c and the teeth 80d are not meshed, the dog clutch 81 is not connected to the housing 80, and the lower teeth 81f and the teeth 83a are meshed. Since the key 81e is engaged with the key groove 85b, the dog clutch 81 and the planetary carrier 85 are connected. Therefore, the dog clutch 81 and the internal gear 83 are connected, and the sun gear 82, the planetary gear 84, the internal gear 83, and the transmission body 87 cannot rotate with respect to the planetary carrier 85. The ball spline 12 rotates, and the sun gear 82, the planetary gear 84, and the internal gear 83 do not rotate on their own axes, but rotate together around the C axis. The dog clutch 81, the planetary carrier 85, the connecting shaft 86, the first arm 40B, the second arm 43B, and the tool 47 rotate around the C axis. As described above, the sun gear 82, the planetary gear 84, the internal gear 83, and the transmission body 87 cannot rotate on their own axes, so the second arm 43B does not rotate around the A axis.

The dog clutch 81, the teeth 80d, the teeth 83a, the planetary carrier 85, the sun gear 82, the planetary gear 84, the internal gear 83, the transmission body 87, the connecting shaft 86, the cross roller bearing 90, and the transmission mechanism 77A form a planetary gear unit. The third embodiment can realize switching of power supply destinations using the planetary gear unit.

The embodiments disclosed here are illustrative in all respects and should be considered not restrictive. The technical features described in each embodiment can be combined with each other, and the scope of the present invention is intended to include all modifications within the scope of the claims and the scope of equivalents to the scope of the claims.

### REFERENCE SIGNS LIST

2: cover
10: motor (power source)
21: first housing (supporting portion)
21c: first engaging portion (switching mechanism)
22: second housing (rotating portion)
22a: first support cylinder (rotating portion)
22b: second support cylinder (rotating portion)
24: first rotating shaft (rotating portion)
26: dog clutch (clutch, switching mechanism)
26b: upper teeth (first teeth)
26c: lower teeth (second teeth)
50: air cylinder (moving mechanism)
50a: rod (moving mechanism)
51: support shaft (moving mechanism)
52: fork (moving mechanism)
27: driving gear (switching mechanism)
27b: small diameter gear (first gear mechanism, transmission mechanism, switching mechanism)
27c: second engaging portion (switching mechanism)
29: spur gear (first gear mechanism, transmission mechanism, switching mechanism)
31: first intermediate shaft (transmission mechanism, switching mechanism)
32: second intermediate shaft (transmission mechanism, switching mechanism)
33: third intermediate shaft (transmission mechanism, switching mechanism)
33b: hypoid pinion (second gear mechanism, transmission mechanism, switching mechanism)
35: second rotating shaft (second rotating portion, transmission mechanism, switching mechanism)
36: hypoid gear (second gear mechanism, transmission mechanism, switching mechanism)
40: first arm
43: second arm
46: main shaft (end effector)
47: tool (end effector)

## Claims

1. A machine tool comprising:
a rotating portion that is configured to rotate around a first axis;
a first arm that extends from the rotating portion;
a second arm that is connected to the first arm and supports an end effector;
a single power source that is configured to supply power to the rotating portion and the second arm; and
a switching mechanism that is configured to switch a power supply destination from the power source from one of the rotating portion or the second arm to the other,
wherein the second arm is configured to rotate around a second axis that intersects the first axis.

2. The machine tool according to claim 1 further comprising:
a supporting portion that supports the rotating portion,
wherein the switching mechanism includes:
a transmission mechanism that is provided on the rotating portion and the first arm for transmitting power to the second arm;
a driving gear that is configured to be driven by the power of the power source and connected to the transmission mechanism; and
a clutch that is provided on the rotating portion and configured to fix the rotating portion to the supporting portion or to connect the rotating portion to the driving gear.

3. The machine tool according to claim 2 further comprising:
a first engaging portion that is provided on the supporting portion and configured to engage with the clutch; and
a second engaging portion that is provided in the driving gear and configured to engage with the clutch,
wherein the clutch engages with at least one of the first engaging portion and the second engaging portion when switching the power supply destination.

4. The machine tool according to claim 3,
wherein the clutch has a cylindrical shape and has one end portion formed with a plurality of first teeth and other end portion formed with a plurality of second teeth,
wherein the first engaging portion is arranged at a position facing between one of the plurality of first teeth and another one of the plurality of first teeth adjoining the one of the plurality of first teeth,
wherein the second engaging portion is arranged at a position facing between one of the plurality of second teeth and another one of the plurality of second teeth adjoining the one of the plurality of second teeth, and
wherein the machine tool further comprises:
a moving mechanism that moves the clutch toward the first engaging portion or the second engaging portion.

5. The machine tool according to any one of claims 2 to 4,
wherein the transmission mechanism includes:
a second rotating portion that is connected to the second arm and configured to rotate around the second axis;
at least one intermediate shaft that is provided between the second rotating portion and the driving gear;
a first gear mechanism that is provided between the intermediate shaft and the driving gear or between the intermediate shafts; and
a second gear mechanism that is provided at a position between the second rotating portion and the intermediate shaft and has a higher reduction ratio than the first gear mechanism.

6. The machine tool according to any one of claims 1 to 5 further comprising:
a cover that covers the rotating portion, the first arm, and the second arm,
wherein the power source is arranged at a position outside the cover.

7. The machine tool according to any one of claims 1 to 6,
wherein an angle between the first axis and the second axis is greater than 45 degrees and equal to or less than 90 degrees.

8. The machine tool according to claim 7 further comprising:
a rotational axis parallel to the second axis,
wherein a starting torque around the rotational axis parallel to the second axis is greater than product of a component of a cutting load acting on the end effector about the second axis and a distance between the second axis and the end effector.

9. The machine tool according to claim 1,
wherein the switching mechanism includes a transmission gear unit with four bevel gears or a planetary gear unit.
